# EUROPÄISCHE PATENTSCHRIFT

(11) **EP 4 308 825 B1**
(45) Veröffentlichungstag und Bekanntmachung des Hinweises auf die Patenterteilung: **17.12.2025**
(21) Anmeldenummer: 22709700.3
(22) Anmeldetag: 01.03.2022
(51) Int. Cl.: F16D 55/00, F16D 65/00, F16D 66/02, F16B 21/18

(54) **VORRICHTUNG MIT EINEM SENSOR UND EINEM SPRENGRING ZUM ANZEIGEN EINES VERSCHLEISSES EINES BREMSBELAGS EINER SCHEIBENBREMSE**
DEVICE COMPRISING A SENSOR AND A SNAP RING FOR INDICATING WEAR OF A BRAKE PAD OF A DISC BRAKE
DISPOSITIF COMPRENANT UN CAPTEUR ET UN ANNEAU ÉLASTIQUE POUR INDIQUER L'USURE D'UNE PLAQUETTE DE FREIN D'UN FREIN À DISQUE

(30) Priorität: 15.03.2021 DE 102021106219
(43) Veröffentlichungstag der Anmeldung: 24.01.2024
(73) Patentinhaber: ZF CV Systems Europe BV, 1170 Brüssel (BE)
(72) Erfinder: REDEMANN, Bernward, 68766 Hockenheim (DE)
(74) Vertreter: Schäferjohann, Volker
(86) Internationale Anmeldenummer: PCT/EP2022/055115
(87) Internationale Veröffentlichungsnummer: WO 2022/194537

(56) Entgegenhaltungen:
- WO-A1-97/25539
- DE-A1- 102015 211 176
- FR-A- 994 526
- GB-A- 649 860
- JP-A- 2000 220 676
- JP-A- H1 047 397
- US-A- 3 758 923

## Beschreibung

Die vorliegende Erfindung bezieht sich auf eine Vorrichtung zum Anzeigen eines Verschleißes eines Bremsbelags einer Scheibenbremse, wie sie insbesondere in Nutzfahrzeugen, beispielsweise in Lastkraftfahrzeugen, Anhängefahrzeugen oder Omnibussen, verwendet wird.

Scheibenbremsen in Kraftfahrzeugen weisen Bremsbeläge auf, die in Abhängigkeit einer Betätigung eines Bremswertgebers von einem Aktuator auf eine mit einem abzubremsenden Rad verbundene Bremsscheibe gedrückt werden, um bei einem Bremsvorgang eine Bremswirkung auf die Bremsscheibe und das Rad übertragen zu können. Die Bremsbeläge weisen Reibbeläge auf, die sich durch die Bremsvorgänge abnutzen.

Es ist erwünscht, einen Bremsbelag dann auszutauschen, wenn sich sein Reibbelag auf eine vorgegebene Verschleißgrenze abgeschliffen hat.

Insbesondere Nutzfahrzeuge besitzen daher oft eine Bremsbelagverschleißanzeige, durch die ein Fahrer des Nutzfahrzeugs auf einen Verschleiß eines Bremsbelags aufmerksam gemacht wird.

Eine Scheibenbremse mit einer derartigen Bremsbelagverschleißanzeige ist beispielsweise aus der WO 2012/052121 A1 bekannt.

Die DE 39 04 673 A1 offenbart eine Vorrichtung zum Anzeigen des Verschleißes eines Reibbelages eines Bremsbelags einer Scheibenbremse, die eine elektrisch leitende Einrichtung aufweist, die bei Erreichen einer vorgegebenen Verschleißgrenze beim Bremsen mit der Bremsscheibe elektrisch in Kontakt kommt. Die Vorrichtung weist einen Sensor auf, der in eine Bohrung der Scheibenbremse eingeschoben wird und über einen Sprengring in der Bohrung befestigt ist. Durch den Sprengring ist der Sensor mit einer Vorspannung in der Bohrung gesichert, so dass sich der Sensor beim Fahren des Nutzfahrzeugs nicht verdrehen oder verschieben kann.

Eine weitere Vorrichtung zum Anzeigen eines Verschleißes offenbart die JPH1047397A, welche eine Verschleißsensorvorrichtung und einen in Form gebogenen Federdraht zum Fixieren der Verschleißsensorvorrichtung in einem Bremsbelag zeigt. Der Federdraht liegt mit seinen geraden Bereichen axial an dem Belagverschleißsensor an. Die kreisrunde Biegung dient dem axialen Herausziehen des Sprengrings zum Lösen des Belagverschleißsensors vom Bremsbelag.

Die JP2000220676 A und die DE102015211176 A1 offenbaren eine weitere Vorrichtung zum Anzeigen eines Verschleißes, wobei der Sprengring pinzettenförmig ausgebildet ist.

Die GB649860A, WO9725539 A1, FR994526 A und die US 3758923 offenbaren Sprengringe in unterschiedlichsten Ausführungsformen, jedoch keine Vorrichtung zum Anzeigen eines Verschleißes an sich.

Für die Sicherung eines derartigen Sensors in einem Bremsbelag werden beispielsweise Runddraht-Sprengringe verwendet. Für die Montage eines derartigen Sprengrings wird eine Spezialzange benötigt. Jedoch ist die Montage eines Sprengrings auch mit einer Spezialzange eine diffizile Angelegenheit. Sprengringe dieser Art sind auch als Sicherungsring, Federring oder Schnappring bekannt.

Es ist daher eine Aufgabe der Erfindung, eine Vorrichtung zum Anzeigen eines Verschleißes eines Bremsbelags einer Scheibenbremse der vorangehend genannten Art anzugeben, die eine vereinfachte Montage aufweist.

Diese Aufgabe wird durch eine Vorrichtung zum Anzeigen eines Verschleißes eines Bremsbelags einer Scheibenbremse gemäß Anspruch 1gelöst.

Der abhängige Anspruch beinhaltet eine vorteilhafte Weiterbildung und Verbesserung der Erfindung entsprechend der nachfolgenden Beschreibung dieser Maßnahmen.

Die Erfindung betrifft eine Vorrichtung zum Anzeigen des Verschleißes eines Bremsbelags einer Scheibenbremse, die bei Erreichen einer vorgegebenen Verschleißgrenze des Bremsbelags ein Signal auslöst. Die Vorrichtung enthält einen Sprengring und einen Sensor mit einem Sensorkopf, der eine Nut aufweist zur Aufnahme des Sprengrings zur Sicherung des Sensors an dem Bremsbelag. Der Sensorkopf ist hierbei in einer Bohrung des Bremsbelags befestigbar. Die Nut weist einen abgeflachten Bereich auf und die Form des Sprengrings ist an den abgeflachten Bereich angepasst.

Der Sprengring weist einen runden Bereich mit einer gleichförmigen Krümmung auf, der durch zwei Enden begrenzt ist.

Weiterhin grenzt jedes Ende des runden Bereiches jeweils ein Endstück des Sprengrings von dem runden Bereich ab, wobei jedes Endstück einen geraden Bereich aufweist. Der Sprengring wird durch Endflächen begrenzt, wobei durch die Abknickungen die Endflächen planparallel gegenüberliegen, da hier die geraden Bereiche der Endstücke auf einer geraden Linie liegen, parallel zueinander, und die Endflächen senkrechte Schnittflächen aufweisen.

Darüber hinaus weist der Sensorkopf eine zylindrische Form auf und die Nut verläuft über einen Umfang des Sensorkopfs.

In einem weiteren bevorzugten Ausführungsbeispiel weist der abgeflachte Bereich der Nut einen geraden Bereich auf, und die Form des Sprengrings ist an den geraden Bereich der Nut angepasst.

Erfindungsgemäß sind weiterhin der abgeflachte Bereich der Nut und der weitere Verlauf der Nut, sowie der runde Bereich und die beiden abgeflachten Bereiche des Sprengrings derart ausgestaltet, dass der Sprengring mit einem Passsitz in die Nut einrastet.

Mit einer Vorrichtung zum Anzeigen des Verschleißes wird eine leichtere Montage des Sensors an einem Bremsbelag einer Scheibenbremse ermöglicht. Durch die abgeflachten Endstücke des Sprengrings ist hierbei eine definierte Positionierung des Sprengrings in der Nut des Sensorkopfes möglich. Ausführungsbeispiele der Erfindung sind in den Zeichnungen schematisch dargestellt und werden nachfolgend anhand der Figuren näher erläutert.

Es zeigen:
- Fig. 1: einen Sprengring nach dem Stand der Technik;
- Fig. 2: einen Sprengring für eine Vorrichtung gemäß Fig. 3; und
- Fig. 3: den Sprengring der Fig. 2 und einen Sensor einer Vorrichtung zum

Anzeigen des Verschleißes eines Bremsbelags einer Scheibenbremse nach der Erfindung.

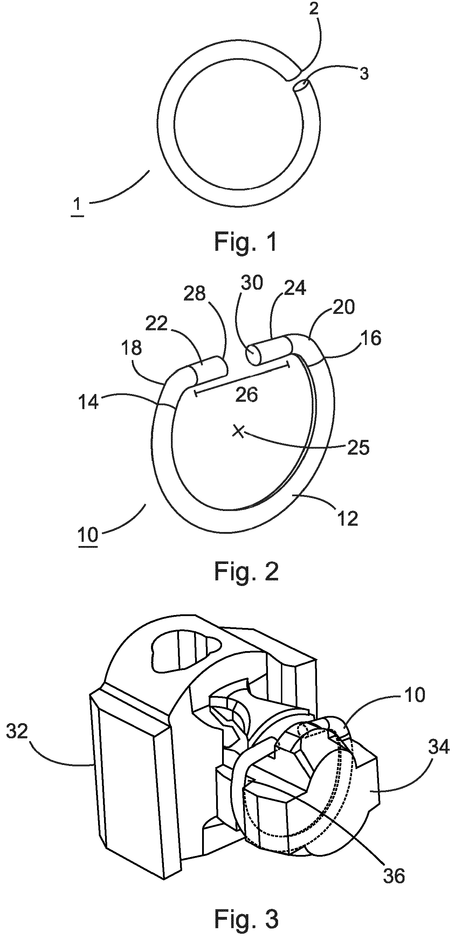

In der Fig. 1 ist ein Sprengring 1 nach dem Stand der Technik in einer Aufsicht dargestellt, der eine gleichförmig gebogene, kreisförmige Krümmung bis zu seinen Enden 2, 3 aufweist. Der Sprengring 1 ist vorzugsweise aus einem runden Stahldraht gefertigt.

Der Sprengring 1 kann beispielsweise zur Befestigung eines Sensors einer Bremsbelagverschleißanzeige an einer Scheibenbremse verwendet werden. Hierfür wird er in eine Nut des Sensors eingesetzt. Für die Montage eines derartigen Sprengrings 1 wird eine Spezialzange benötigt. Es ist jedoch trotzdem möglich, dass der Sprengring 1 bei der Montage aufgrund seiner freien Enden in der Nut blockiert.

Ein Sprengring 10 für eine erfindungsgemäße Vorrichtung nach Fig. 3 ist schematisch in der Fig. 2 dargestellt. Der Sprengring 10 weist ein Bereich 12 mit einer gleichförmig gebogenen, kreisförmigen Krümmung auf, wobei der Bereich 12 an seinen Enden 14, 16 jeweils durch eine Abknickung 18, bzw. 20 begrenzt ist. Durch die Abknickungen 18, 20 sind hierdurch zwei Endstücke 22, 24 des Sprengrings 10 vom dem kreisförmigen Bereich 12 abgegrenzt. Die Abknickungen 18, 20 sind hierbei nach innen gebogen, in Richtung eines durch den kreisförmigen Bereich 12 definierten Zentrums 25 des Sprengrings 10. Die Endstücke 22, 24 des Sprengrings 10 sind abgeflacht.

Die abgeflachten Endstücke 22, 24 weisen insbesondere jeweils einen geraden Bereich auf, durch eine Strecke 26 angedeutet. Der Sprengring 10 wird durch Endflächen 28, 30 begrenzt, wobei durch die Abknickungen 18, 20 in diesem Ausführungsbeispiel die Endflächen 28, 30 planparallel gegenüberliegen, da hier die geraden Bereiche der Endstücke 22, 24 auf einer in der Fig. 2 nicht dargestellten geraden Linie liegen, parallel zueinander, und die Endflächen 28, 30 senkrechte Schnittflächen aufweisen.

Der Sprengring 10 kann insbesondere zur Befestigung eines Sensors an einem Bremsbelag einer Scheibenbremse verwendet werden.

Die Fig. 3 zeigt schematisch einen Sensor 32 einer Vorrichtung zum Anzeigen des Verschleißes eines Bremsbelags einer Scheibenbremse nach der Erfindung, der einen zylinderförmigen Sensorkopf 34 aufweist, mit dem der Sensor 32 an einem Bremsbelag einer Scheibenbremse, in der Fig. 3 nicht dargestellt, befestigt werden kann. Der Sensorkopf 34 wird hierfür beispielsweise in eine Bohrung des Bremsbelags geschoben und anschließend durch dem Sprengring 10 gesichert. Der Sensorkopf 34 kann durch den Sprengring 10 insbesondere mit einer Vorspannung in der Bohrung des Bremsbelags befestigt werden, so dass der Sensor 32 gegen Verdrehungen und Verschiebungen gesichert ist.

Der Sensor 32 weist eine über den Umfang des Sensorkopfes 34 verlaufende Nut 36 zur Aufnahme des Sprengrings 10 auf. Die Nut 36 weist insbesondere einen geraden Bereich auf, der entsprechend den geraden Endstücken 22, 24 des Sprengrings 10 passend dimensioniert ist. Der gerade Bereich der Nut 36 und der weitere Verlauf der Nut 36, sowie der kreisförmige Bereich 12 und die abgeflachten Endstücke 22, 24 des Sprengrings 10 sind insbesondere derart geformt, dass der Sprengring 10 mit einem Passsitz in die Nut 36 einrastet. Durch den Sprengring 10 ist der Sensor 32 lösbar an einem Bremsbelag befestigbar.

Der Sprengring 10 ist vorzugsweise ein Runddrahtsprengring und ist beispielsweise aus einem runden Stahldraht, insbesondere einem Federdraht, gefertigt.

Alle hierin erwähnten Beispiele wie auch bedingte Formulierungen sind ohne Einschränkung auf solche speziell angeführten Ausführungsbeispiele zu verstehen. Die Erfindung ist nicht auf die hier beschriebenen Ausführungsbeispiele beschränkt. Die angehängten Ansprüche definieren den Schutzumfang der Erfindung.

### Bezugszeichenliste (Bestandteil der Beschreibung)

- 1: Sprengring
- 2, 3: Enden des Sprengrings 1
- 10: Sprengring
- 12: Bereich mit einer gleichförmigen Krümmung
- 14, 16: Enden des Bereichs 12
- 18, 20: Abknickungen
- 22, 24: Endstücke des Sprengrings 10
- 25: Zentrum des Sprengrings 10
- 26: Strecke
- 28, 30: Endflächen des Sprengrings 10
- 32: Sensor
- 34: Sensorkopf
- 36: Nut

## Patentansprüche

1. Vorrichtung zum Anzeigen des Verschleißes eines Bremsbelags einer Scheibenbremse, die bei Erreichen einer vorgegebenen Verschleißgrenze des Bremsbelags ein Signal auslöst, mit einem Sprengring (10) und mit einem Sensor (32), der einen Sensorkopf (34) aufweist, der in einer Bohrung des Bremsbelags befestigbar ist und der eine Nut (36) aufweist zur Aufnahme des Sprengrings (10) zur Sicherung des Sensors (32) an dem Bremsbelag, wobei die Nut (36) einen abgeflachten Bereich aufweist und die Form des Sprengrings (10) an den abgeflachten Bereich angepasst ist, wobei der Sprengring (10) einen runden Bereich (12) mit einer gleichförmigen Krümmung aufweist, und wobei der runde Bereich (12) durch zwei Enden (14, 16) begrenzt ist, wobei jedes Ende (14, 16) des runden Bereiches (12) jeweils ein Endstück (22, 24) des Sprengrings (10) von dem runden Bereich (12) abgrenzt, wobei jedes Endstück (22, 24) einen geraden Bereich aufweist, und die beiden geraden Bereiche durch Endflächen (28, 30) des Sprengrings (10) begrenzt sind, **dadurch gekennzeichnet, dass** die Endflächen (28, 30) planparallel gegenüberliegen und wobei der Sensorkopf (34) eine zylindrische Form aufweist und die Nut (36) über einen Umfang des Sensorkopfs (34) verläuft, wobei der abgeflachte Bereich der Nut (36) und der weitere Verlauf der Nut (36), sowie der runde Bereich (12) und die beiden Endstücke (36) des Sprengrings (36) derart gestaltet sind, dass der Sprengring (10) mit einem Passsitz in die Nut (36) einrastet.

2. Vorrichtung nach Anspruch 1, wobei der abgeflachte Bereich der Nut (36) einen geraden Bereich aufweist, und die Form des Sprengrings (10) an den geraden Bereich der Nut (36) angepasst ist.

## Claims

1. Device for indicating the wear on a brake pad of a disc brake, which device triggers a signal when a predetermined wear limit of the brake pad is reached, and comprises a snap ring (10) and a sensor (32) having a sensor head (34) which can be fastened in a bore of the brake pad and which has a groove (36) for receiving the snap ring (10) in order to secure the sensor (32) to the brake pad, the groove (36) having a flattened region and the shape of the snap ring (10) being adapted to the flattened region, the snap ring (10) having a round region (12) with a uniform curvature, and the round region (12) being delimited by two ends (14, 16), each end (14, 16) of the round region (12) respectively distinguishing an end piece (22, 24) of the snap ring (10) from the round region (12), each end piece (22, 24) having a straight region, and the two straight regions being delimited by end surfaces (28, 30) of the snap ring (10), **characterized in that** the end surfaces (28, 30) are opposite one another in a plane-parallel manner, the sensor head (34) having a cylindrical shape and the groove (36) extending over a circumference of the sensor head (34), with the flattened region of the groove (36) and the further course of the groove (36), as well as the round region (12) and the two end pieces (36) of the snap ring (36), being designed such that the snap ring (10) engages in the groove (36) with a snug fit.

2. Device according to claim 1, wherein the flattened region of the groove (36) has a straight region, and the shape of the snap ring (10) is adapted to the straight region of the groove (36).

## Revendications

1. Dispositif permettant d'indiquer l'usure d'une garniture de frein d'un frein à disque, lequel dispositif déclenche un signal lorsqu'une limite d'usure prédéfinie de la garniture de frein est atteinte, comportant un anneau d'arrêt (10) et comportant un capteur (32) qui présente une tête de capteur (34) qui peut être fixée dans un alésage de la garniture de frein et présente une rainure (36) pour la réception de l'anneau d'arrêt (10) pour la fixation du capteur (32) sur la garniture de frein, dans lequel la rainure (36) présente une zone aplatie et la forme de l'anneau d'arrêt (10) est adaptée à la zone aplatie, dans lequel l'anneau d'arrêt (10) présente une zone ronde (12) comportant une courbure uniforme, et dans lequel la zone ronde (12) est limitée par deux extrémités (14, 16), dans lequel chaque extrémité (14, 16) de la zone ronde (12) délimite respectivement une pièce d'extrémité (22, 24) de l'anneau d'arrêt (10) par rapport à la zone ronde (12), dans lequel chaque pièce d'extrémité (22, 24) présente une zone droite, et les deux zones droites sont délimitées par des surfaces d'extrémité (28, 30) de l'anneau d'arrêt (10), **caractérisé en ce que** les surfaces d'extrémité (28, 30) se font face dans des plans parallèles et dans lequel la tête de capteur (34) présente une forme cylindrique et la rainure (36) s'étend sur une périphérie de la tête de capteur (34), dans lequel la zone aplatie de la rainure (36) et l'étendue ultérieure de la rainure (36) ainsi que la zone ronde (12) et les deux pièces d'extrémité (36) de l'anneau d'arrêt (36) sont conçues de telle sorte que l'anneau d'arrêt (10) s'encliquette avec un ajustement serré dans la rainure (36).

2. Dispositif selon la revendication 1, dans lequel la zone aplatie de la rainure (36) présente une zone droite, et la forme de l'anneau d'arrêt (10) est adaptée à la zone droite de la rainure (36).
